# DEMANDE DE BREVET EUROPEEN

(11) **EP 1 086 910 A1**
(43) Date de publication de la demande: **28.03.2001**
(21) Numéro de dépôt: 00420198.4
(22) Date de dépôt: 26.09.2000
(51) Int. Cl.: B65G 1/04

(54) **Magasin de stockage compact automatisé**

(30) Priorité: 27.09.1999 FR 9912259
(71) Demandeur: Savoye Logistics, 21550 Ladoix Serrigny (FR)
(72) Inventeur: Piette, Bernard, 21000 Dijon (FR)
(74) Mandataire: Bratel, Gérard

(57) **Abrégé**

Le magasin comprend des niveaux de rangement superposés, subdivisés chacun par des allées parallèles (2a, 2b, 2c...) donnant accès à des rangées de couloirs de stockage (3). La mise en place et le prélèvement des produits sont assurés par des chariots autonomes (7), déplaçables sur chaque niveau équipé à cet effet d'un ensemble de rails (4,6), orientés selon deux axes perpendiculaires X, Y, les chariots (7) pouvant aussi être amenés d'un niveau à un autre par des élévateurs (5). Chaque couloir (3), étant prévu pour recevoir deux ou plusieurs produits à stocker, est équipé de rails recevant un "satellite" (25) servant à déposer ou reprendre un produit, en coopérant avec un chariot (7) sur lequel ce "satellite" (25) peut aussi être embarqué.

## Description

La présente invention concerne, de façon générale, les installations automatisées qui permettent d'assurer le stockage à forte densité et la mise à disposition de produits divers, installations qui, dans la suite de la description, seront désignées par l'expression "magasin de stockage compact". Plus particulièrement, cette invention s'intéresse à un tel magasin, comprenant une pluralité de niveaux de rangement superposés, dans lequel des chariots autonomes assurent les déplacements des produits, pour leur mise en place à l'intérieur des zones de stockage et pour leur prélèvement depuis ces zones, lesdits chariots pouvant non seulement se déplacer horizontalement à un niveau donné, mais aussi être amenés d'un niveau à un autre par des moyens élévateurs. De très nombreuses propositions ont été déjà faites à ce jour pour réaliser des magasins de stockage compact automatiques, permettant non seulement de limiter au maximum les interventions manuelles, mais également de stocker, dans un volume le plus restreint possible, le plus grand nombre de produits, notamment sous forme de palettes ou de conteneurs.

La solution actuellement la plus répandue pour réaliser des magasins de stockage compact automatiques consiste à réaliser des ensembles dans lesquels les zones de rangement se présentent sous la forme de "meubles de stockage" de grande hauteur, répartis de part et d'autre d'allées parallèles dans lesquelles se déplacent des ensembles mobiles couramment désignés par le terme "transstockeur". Chaque "meuble de stockage" comprend une pluralité de niveaux superposés constituant des rangées de couloirs perpendiculaires aux allées, accueillant chacun deux ou plusieurs produits dans le sens de la profondeur, selon la densité de stockage recherchée.

D'une manière générale, de tels magasins de stockage se définissent selon trois axes géométriques, qui sont les axes de déplacement des produits :
- axe X : qui est l'axe des allées et des meubles de stockage, est appelé axe longitudinal du magasin,
- axe Y : qui est l'axe transversal du magasin, aussi axe d'introduction des produits dans les couloirs, perpendiculaire aux meubles et aux allées.
- axe Z : axe vertical.

Pour assurer la manutention des produits à l'intérieur de tels ensembles de stockage, les constructeurs de matériels proposent généralement des appareils automatiques ou pilotés du type "transstockeur", qui permettent de ranger et de prélever des palettes ou des conteneurs dans les couloirs des meubles de stockage qui bordent chaque allée. Les "transstockeurs" comportent toujours un système élévateur qui permet d'amener l'organe de manutention de la palette ou du conteneur en face du couloir concerné. Cet organe de manutention est soit un système de fourches bidirectionnelles à double profondeur pour les couloirs accueillant deux palettes ou deux conteneurs, soit un "satellite", c'est-à-dire un petit chariot auxiliaire embarqué qui circule dans le couloir et y dépose ou y reprend les charges, une à la fois. De tels appareils automatiques de manutention ont tous en commun le fait qu'ils roulent soit directement au sol, soit sur des rails fixés au sol. Ils peuvent ou non changer d'allée.

Un autre système connu est composé de "satellites" installés à demeure dans les couloirs, d'équipements de transfert longitudinaux implantés à chaque niveau en face des couloirs et d'ascenseurs situés chacun à l'extrémité d'une allée.

Toutes ces solutions requièrent la mise en oeuvre d'un équipement de manutention à priori excédentaire en termes de flux potentiel de produits, par rapport au besoin moyen d'entrée/sortie de chaque allée, équipement nécessaire dès le première installation.

Il existe déjà un système qui permet d'adapter le nombre de moyens présents dans l'installation. Ce système décrit dans le brevet français N° 2685306, utilise des chariots autonomes de manutention, qui peuvent être amenés à un niveau prédéterminé par des moyens élévateurs (ascenseurs), et qui sont déplaçables sur chaque niveau de rangement, équipé d'un ensemble de rails formant deux réseaux, l'un orienté selon l'axe longitudinal X du magasin et l'autre orienté selon l'axe transversal Y (tels que définis ci-dessus). Chaque chariot, tel que décrit dans ce document, comporte deux châssis permutables équipés chacun de jeux de roues, et pouvant coopérer, l'un, avec les rails orientés selon l'axe X, et l'autre, avec les rails orientés selon l'axe Y. Une telle installation ne peut, avec ses moyens de manutention, que comporter et desservir des alvéoles de faible profondeur, correspondant à la dimension d'un seul produit. La produit. La densité de stockage est ainsi très limitée, car la place occupée par les allées est ici excessive, par rapport au volume de stockage utile, ce qui diminue en conséquence, pour une surface au sol donnée, le volume disponible pour le stockage proprement dit.

Pour assurer la manutention et le stockage compact de produits au sol, il a été proposé de réaliser des systèmes d'accumulation dynamique alimentés par des chariots autonomes pouvant effectuer des changements de direction, ces chariots étant guidés par des rails ou autoguidés et étant en général équipés d'une ou plusieurs roues orientables leur permettant d'effectuer des virages. Une telle conception de chariot entraîne donc la réalisation de circuits de déplacement qui, dans les zones de changement de direction, impliquent une surface importante, étant donné que le chariot se déplace selon une courbe, ce qui diminue ici aussi, pour une surface au sol donnée, la zone disponible pour le stockage proprement dit.

Une autre solution consiste à alimenter le système d'accumulation dynamique par un réseau de manutention (convoyeurs et/ou navettes), ce qui engendre de lourds investissements lorsque la distance entre la source des produits et le stockage est grande.

La présente invention vise à remédier aux inconvénients des diverses solutions antérieures, rappelées ci-dessus, en fournissant une solution technique simple, économique et facile à mettre en oeuvre, qui autorise la réalisation et le fonctionnement optimal d'ensembles de stockage n'occupant qu'un minimum de surface au sol, et optimisant le volume de stockage utile de l'ensemble du magasin, et dont l'équipement de manutention installé est limité à celui qui est strictement nécessaire à l'exécution des flux globaux de produits à transférer, cette invention pouvant être considérée comme un perfectionnement à l'état de la technique selon le brevet français précité N° 2685306.

A cet effet, l'invention a pour objet un magasin de stockage compact automatisé, comprenant une pluralité de niveaux de rangement superposés, chaque niveau étant subdivisé par plusieurs allées parallèles donnant accès, d'un côté ou de chaque côté, à des rangées d'emplacements de stockage, prévus pour recevoir les produits à stocker, la mise en place et le prélèvement des produits à l'intérieur des emplacements de stockage étant assurés par l'intermédiaire de chariots autonomes déplaçables sur chaque niveau de rangement, équipé d'un ensemble de rails, les chariots pouvant aussi être amenés d'un niveau à un autre par des moyens élévateurs, ce magasin de strockage étant caractérisé en ce que :
- chaque niveau de rangement comporte un ensemble de rails formant au moins un réseau orienté selon l'axe longitudinal X du magasin, à l'intérieur de chaque allée,
- chaque emplacement de stockage se présente comme un couloir de stockage, prévu pour recevoir au moins deux ou plusieurs produits à stocker, chaque couloir étant lui-même équipé de rails permettant le mouvement d'un "satellite" prévu pour venir déposer ou reprendre un produit,
- les chariots autonomes sont équipés d'un châssis et de roues leur permettant de se déplacer au moins sur les rails orientés selon l'axe longitudinal X du magasin, chaque chariot étant apte à embarquer un "satellite", vide ou chargé, à le déposer ou à le reprendre, devant chaque couloir de stockage, et
- les chariots autonomes sont équipés chacun d'un moyen, tel que convoyeur bi-chaîne, pour recevoir ou présenter un produit à poser sur un "satellite", ou pour prendre ou déposer un produit sans l'intervention d'un "satellite".

Dans une forme de réalisation préférée de l'invention, au moins un niveau de rangement comporte aussi des rails formant au moins une voie orientée selon l'axe transversal Y du magasin, et croisant les rails orientés selon l'axe longitudinal X du magasin, chaque chariot autonome comportant deux châssis permutables équipés chacun de jeux de roues pouvant coopérer, l'un, avec les rails orientés selon l'axe longitudinal X, et l'autre, avec les rails orientés selon l'axe transversal Y.

Avantageusement, un ascenseur est implanté en face de chaque voie orientée selon l'axe longitudinal X, donc en face de chaque allée du magasin de stockage, en tant que moyen élévateur permettant d'amener un chariot autonome d'un niveau de stockage à un autre.

Ainsi, l'invention fournit un magasin dans lequel les emplacements de stockage, conformés en couloirs de stockage pourvus eux-mêmes de rails pouvant accueillir un "satellite", possèdent une profondeur plus ou moins importante, leur permettant de recevoir deux ou plusieurs produits, tels que palettes ou conteneurs (stockage dit "multi-profondeur"). Les "satellites", étant autonomes, permettent de découpler les mouvements de ces "satellites" et des chariots. Dans une installation donnée, le nombre de chariots et le nombre de "satellites" sont choisis pour optimiser les mouvements, sachant que tout "satellite" peut coopérer avec n'importe lequel des chariots. De plus, dans le cas de chariots à déplacements bi-directionnels, aptes à se déplacer aussi dans le sens transversal du magasin (axe Y), ces chariots peuvent passer d'une allée à une autre, donc être, à tout moment, judicieusement affectés aux secteurs qui les requièrent. Le changement de direction de déplacement (axe X ou Y) des chariots s'effectue à angle droit, dans un espace minimum, ce qui minimise l'emprise des rails et contribue à réserver une place maximale au stockage proprement dit. Bien entendu, les dimensions des couloirs sont fonction des caractéristiques des produits à stocker, et du nombre de produits à stocker par couloir, la place réservée au stockage proprement dit étant, en proportion, d'autant plus importante que ce nombre est élevé.

L'invention sera mieux comprise à l'aide de la description qui suit, en référence au dessin schématique annexé représentant, à titre d'exemple, une forme d'exécution de ce magasin de stockage compact automatisé :
- figure 1 et 2 sont des vues respectivement en élévation et de dessus d'un magasin de stockage compact automatisé,, réalisé conformément à l'invention ;
- figure 3 est une vue schématique, en perspective, montrant la structure générale d'un chariot autonome et d'un "satellite" utilisable en combinaison avec le chariot, qui équipent un tel magasin de stockage automatisé ;
- figures 4, 5 et 6 sont des vues de détail, respectivement de côté en élévation, en bout et de dessus, du chariot autonome illustré à la figure 3.

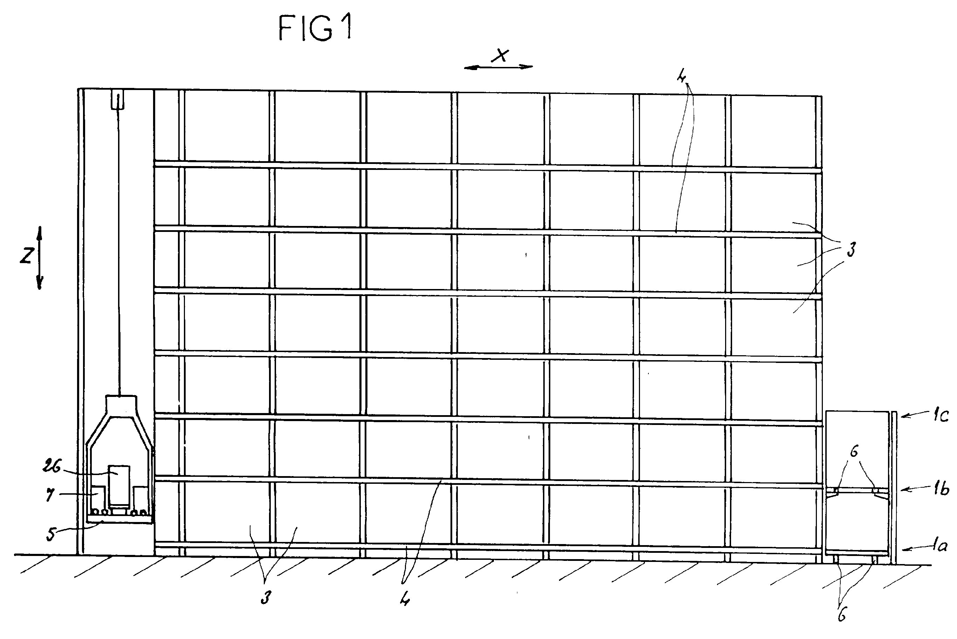

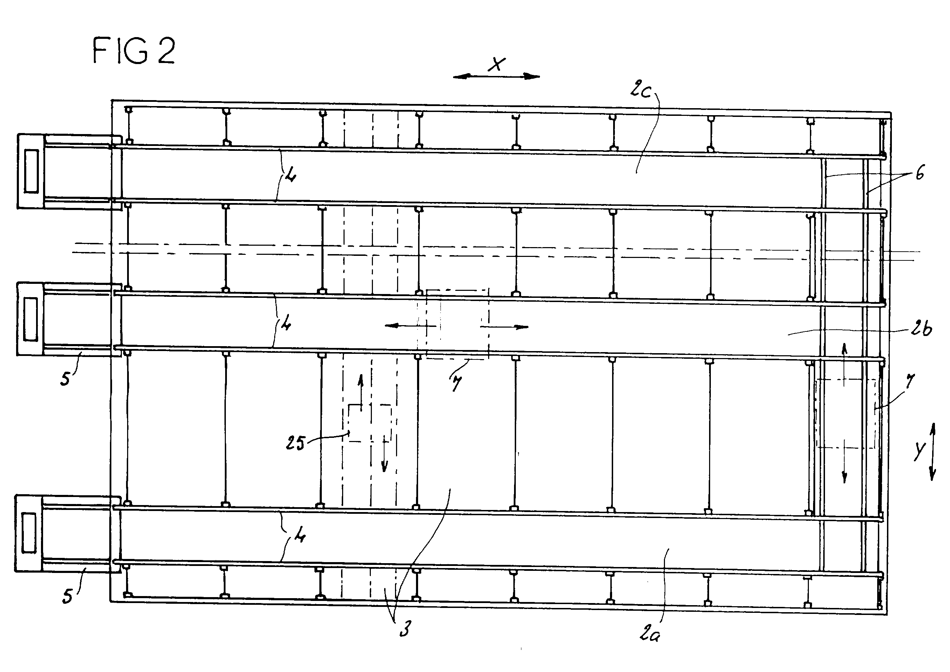

En se référant d'abord aux figures 1 et 2, la structure générale du magasin de stockage compact est la suivante :
Le magasin se présente comme une structure de forme générale parallélépipédique, dont les dimensions en longueur, largeur et hauteur sont déterminées en fonction du volume de stockage souhaité. Ce magasin comporte une pluralité de niveaux de rangement superposés 1a, 1b, 1c..., chaque niveau étant subdivisé par des allées parallèles 2a, 2b, 2c,... de part et d'autre desquelles sont disposées des rangées de couloirs, tous désignés indistinctement par la référence 3, et dont les dimensions sont fonction des caractéristiques des produits à stocker et du nombre de produits à stocker par couloir. Une telle structure tridimensionnelle est réalisée par assemblage de montants, poutrelles et traverses, de manière connue.

Chaque niveau de rangement 1a, 1b, 1c... comporte un ensemble de rails 4 formant un réseau de voies orientées selon l'axe longitudinal X du magasin, une voie étant présente à l'intérieur de chaque allée 2a, 2b, 2c...

A au moins une des extrémités des allées 2a, 2b, 2c... se trouve au moins un ascenseur ou élévateur 5 qui a pour rôle de pouvoir introduire et reprendre les chariots autonomes (décrits ci-après) aux différents niveaux 1a, 1b, 1c...

Au moins un niveau de rangement (dans l'exemple illustré les niveaux 1a et 1b) comporte un ensemble de rails 6 formant une voie orientée selon l'axe transversal Y du magasin située à l'une des extrémités des allées 2a, 2b, 2c et dont le rôle est de permettre aux chariots autonomes de passer d'une allée à une autre, par exemple de l'allée 2a à l'allée 2b.

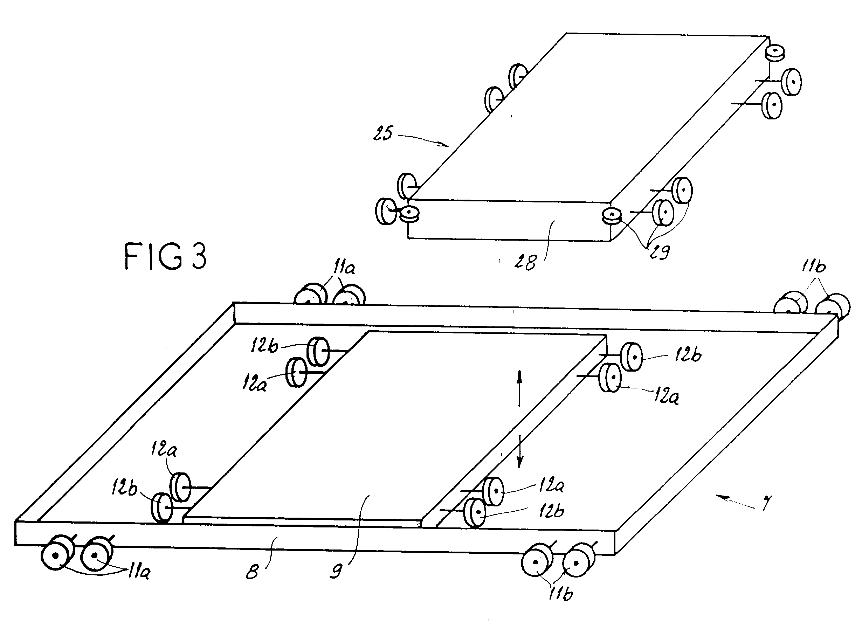

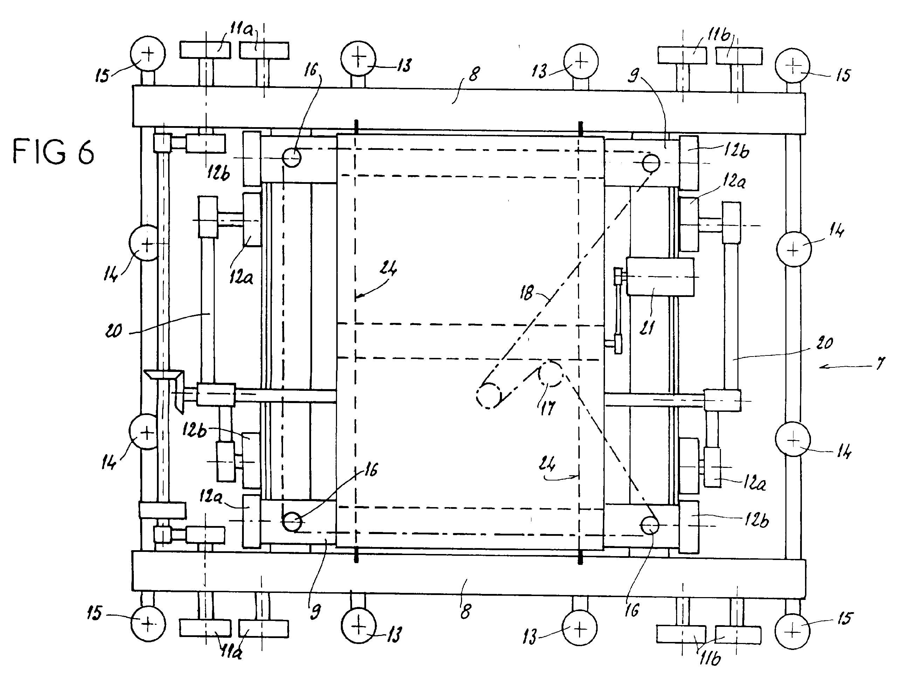

La structure générale d'un chariot autonome, désigné globalement par la référence 7, et qui ressort plus particulièrement des figures 3 à 6, est la suivante :
Le chariot autonome 7 comporte deux châssis permutables 8 et 9 équipés chacun de jeux de roues respectivement 11 et 12 pouvant être associés, l'un 8, avec les rails 4 orientés selon l'axe X, l'autre 9, avec les rails 6 orientés selon l'axe Y. Les deux châssis élémentaires 8 et 9 sont mobiles l'un par rapport à l'autre selon l'axe vertical Z.

L'un des châssis 8 dit "châssis extérieur" comporte des roues motrices 11a et porteuses 11b nécessaires aux déplacements selon l'axe X, ainsi que des galets de guidage latéral selon les deux axes X et Y, soit : des galets 13 pour guidage selon l'axe X, des galets 14 pour guidage selon l'axe Y, et des galets 15 pour guidage selon les axes X et Y. Ce châssis extérieur 8 supporte encore d'autres organes :
- des vis à billes 16 qui assurent la liaison et le mouvement relatif vertical des deux châssis 8 et 9 ;
- un moteur 17 et la transmission associée 18 de commande des vis à billes 16 ;
- un moteur 19 et la transmission associée 20 de commande des roues motrices selon les axes X et Y ;
- un moteur de commande 21 d'un convoyeur à chaînes (voir ci-après) prévu pour accueillir un "satellite" ;
- des supports pour des blocs de batteries 22 ;
- une armoire électrique 23.

L'autre châssis 9 dit "châssis intérieur" supporte des roues motrices 12a et porteuses 12b, nécessaires aux déplacements selon l'axe Y, ainsi que le convoyeur à chaînes, plus particulièrement un convoyeur bi-chaîne 24, prévu pour accueillir un "satellite" 25 (voir figure 3), sur lequel repose le produit à manipuler. Ce châssis intérieur 9 supporte encore d'autres organes :
- paliers des écrous à billes (coopérant avec les vis 16) sur lesquels il est monté ;
- transmissions nécessaires à la commande des roues motrices 12a.

Chaque chariot autonome 7 comporte, par ailleurs, des moyens permettant d'assurer ses déplacements de manière automatique, et plus particulièrement un automate programmable ou son équivalent informatique susceptible d'emmagasiner l'information nécessaire à l'exécution d'une séquence d'opérations. Pendant les déplacements et les périodes de stationnement du chariot 7, un ensemble permet à l'automate du chariot d'être en communication avec un ordinateur central assurant la gestion des mouvements. Cette mise en relation peut s'effectuer par radio et/ou par plot d'échange de données.

Un tel chariot 7 présente les avantages suivants :
- Le changement de direction à angle droit s'effectue dans un espace minimum,
- La configuration décrite permet de n'avoir que deux motorisations pour quatre mouvements au total soit : une première motorisation (moteur 19) commune au déplacement selon l'axe X et au déplacement selon l'axe Y, et une seconde motorisation (moteur 17) pour l'ajustement du niveau d'une charge 26 au niveau du plan de dépose de cette charge dans les couloirs 3, et pour la permutation des jeux de roues motrices et porteuses.

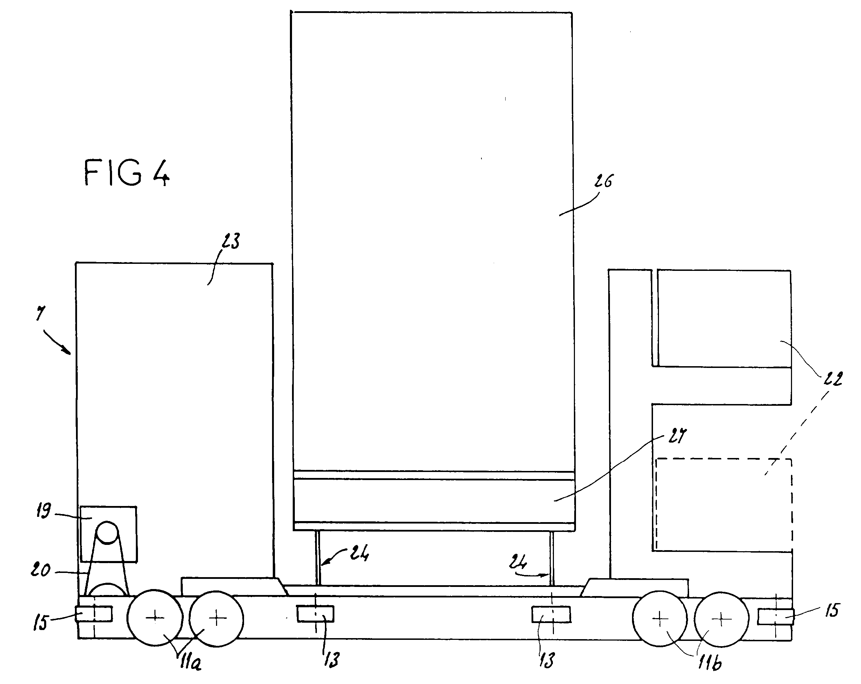

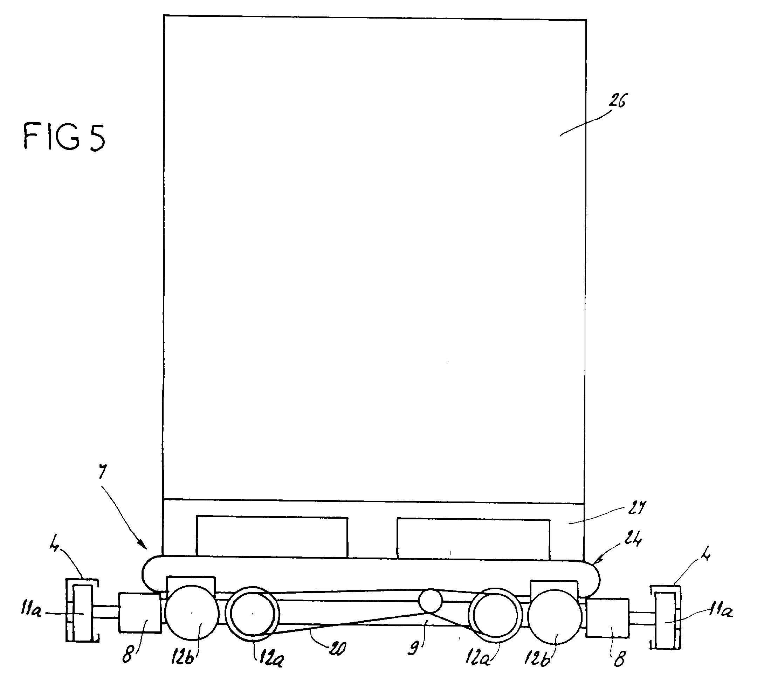

En ce qui concerne la charge 26, celle-ci peut, comme montré au dessin (voir figures 4 et 5), reposer sur une palette 27, elle-même apte à être accueillie sur un "satellite" 25 ou directement sur le convoyeur bi-chaîne 24.

En ce qui concerne le "satellite" 25, celui-ci comporte un bâti 28 ainsi que des galets 29 moteurs, porteurs et de guidage (voir figure 3). Dans la mesure où de tels "satellites" sont connus en soi, il n'en sera pas donné ici de description plus détaillée. Chaque couloir de stockage 3 est équipé de rails (non représentés), qui s'étendent dans la direction longitudinale de ce couloir, jusqu'en bordure de l'allée 2a, 2b, 2c... adjacente, et qui sont aptes à assurer le support et le guidage d'un "satellite" 25.

Le fonctionnement du magasin de stockage précédemment décrit, plus particulièrement la mise en place et le prélèvement des produits à l'intérieur des zones de stockage constituées ici par les couloirs de stockage 3, résulte de la mise en oeuvre combinée des élévateurs 5, des chariots autonomes 7 susceptibles de se déplacer indifféremment sur les rails 4 et 6, donc selon les axes X et Y, et des "satellites" 25 opérant dans les couloirs 3. Un tel ensemble fonctionne de la manière suivante, en considérant d'abord l'amenée d'une charge vers son lieu de stockage :

Le chariot 7 concerné est dans un élévateur 5, une palette 27 (ou un conteneur) étant posée sur le convoyeur bi-chaîne 24 de ce chariot, dont le châssis extérieur 8 est alors en position basse, l'ensemble reposant ainsi par ses roues 11 sur les rails de l'élévateur 5.

Cet élévateur 5 est amené et positionné au niveau 1a, 1b, 1c... désiré, ses rails étant alignés et nivelés avec ceux 4 de l'allée correspondante 2a, 2b, 2c... du niveau considéré. L'ordre d'effectuer sa mission étant en mémoire dans le système de pilotage du chariot 7, celui-ci sort de l'élévateur 5 qui devient disponible pour un autre transfert de chariot. Selon la configuration, le chariot 7 pénètre directement dans l'allée 2a, 2b, 2c... ou y accède après un déplacement selon l'axe Y sur les rails 6, puis il se positionne précisément devant le couloir 3 qui doit accueillir la palette 27. Dans la position où il se trouve - cadre intérieur 9 en position haute - le plan de pose de la palette 27 sur le convoyeur bi-chaîne 24 correspond au niveau de pose sur les rails du couloir 3, de même la surface d'accueil du "satellite" 25 sur le chariot 7 est alignée avec le plan de roulement du "satellite" 25 dans le couloir 3 (si l'alignement n'est pas correct, celui-ci est ajusté avant déplacement du "satellite" 25).

Pour la dépose de la palette 27, les opérations se déroulent de la façon suivante :
- Le système de pilotage informatique a anticipé la venue du chariot 7 et a dirigé le "satellite" 25 à l'extrémité du couloir 3, en bordure de l'allée.
- Le système de commande du chariot 7 valide l'introduction du "satellite" 25 dans le chariot 7, où ce "satellite" 25 entre et vient soulever la palette 27, puis la sort pour la ranger en accumulation dans le couloir 3.
- Le chariot 7 peut repartir à vide et se positionner devant un autre couloir 3 pour effectuer une sortie de palette.

Pour la prise d'une palette 27, les opérations se déroulent alors de la façon suivante :
- Le système de pilotage informatique a anticipé la venue du chariot 7 et a dirigé le "satellite" 25 chargé d'une palette 27 en bordure de l'allée.
- Le système de commande du chariot 7 valide l'introduction du "satellite" 25 dans le chariot 7, où ce "satellite" vient déposer la palette 27 sur le convoyeur bi-chaîne 24.
- Le "satellite" 25 retourne dans son couloir 3 et se trouve prêt pour sa prochaine mission.
- Le chariot 7 peut repartir avec la palette 27 et rejoindre un élévateur 5.

L'élévateur 5 est connecté à un ensemble d'interfaçage de manutention au niveau duquel il présente le chariot 7. Lorsque les niveaux de pose sur les convoyeurs d'interface et du convoyeur bi-chaîne 24 du chariot 7 sont alignés, l'échange de charges (palettes ou conteneurs) peut avoir lieu, avec évacuation de la charge du chariot 7 vers le convoyeur d'interface et entrée d'une charge d'un convoyeur d'interface vers le chariot (ces deux mouvements pouvant être synchronisés). Le chariot 7 est alors prêt pour un nouveau cycle. Le cycle décrit précédemment est appelé "cycle combiné", car le chariot 7 a effectué une entrée et une sortie dans le même cycle. Ce chariot peut évidemment exécuter des cycles d'entrée simple, et des cycles de sortie simple, toute une partie du cycle s'effectuant à vide.

D'autre part, lorsqu'un "satellite" 25 a terminé de remplir ou de vider un couloir 3, il est nécessaire de le transférer vers un autre couloir. Cette opération se réalise pratiquement en temps masqué, puisque le chariot 7 peut embarquer un "satellite" 25 (avec ou sans charge selon le besoin) et le transférer au même niveau ou à un autre niveau 1a, 1b, 1c....

Dans le cas d'utilisation d'un chariot avec système d'accueil de palette fixe, le "satellite" 25 doit accompagner le chariot 7 dans tous ses mouvements afin d'assurer les échanges aussi bien avec les couloirs 3 qu'au niveau des interfaces externes ; cette variante est réservée aux faibles flux.

Un élévateur 5 peut gérer un certain nombre de chariots 7, ce nombre dépendant de la configuration du magasin (hauteur, disposition des interfaces, longueur des allées, typologie des flux à assurer). Le nombre de chariots 7 nécessaires à un moment donné, pour chacune des allées 2a, 2b, 2c... desservies par chacun des élévateurs 5, peut varier dans le temps. Il est alors utile de pouvoir déplacer un chariot 7 d'une zone de travail à une autre. Cette opération est facilement réalisable, grâce à la possibilité de changement d'axe de déplacement du chariot 7, décrite ci-après :

Le chariot 7 quitte l'élévateur 5 à un niveau, tel que le niveau 1a ou 1b, qui dispose d'une voie (rails 6) orientée selon l'axe Y. Le chariot 7 roule sur une portion de voie (rails 4) orientée selon l'axe X, jusqu'au croisement de cette dernière avec les rails 6. Il s'arrête avec précision sur ce croisement de voies. Le châssis intérieur 9 du chariot 7 descend, ses roues 12 prenant alors appui sur les rails 6, tandis que le châssis extérieur 8 monte, ses roues 11 quittant alors les rails 4. Le chariot 7 se met en route selon la direction de l'axe Y, et se déplace jusqu'au croisement des rails 6 avec la voie correspondant à la nouvelle allée 2a, 2b, 2c... qu'il doit rejoindre. Il s'arrête avec précision sur ce croisement, son châssis extérieur 8 redescend alors, et le chariot 7 retrouve sa position de circulation sur une voie orientée selon l'axe X.

## Revendications

1. Magasin de stockage compact automatisé, comprenant une pluralité de niveaux de rangement superposés (1a, 1b, 1c...), chaque niveau étant subdivisé par plusieurs allées parallèles (2a, 2b, 2c...) donnant accès, d'un côté ou de chaque côté, à des rangées d'emplacements de stockage (3), prévus pour recevoir les produits à stocker, la mise en place et le prélèvement des produits à l'intérieur des emplacements de stockage (3) étant assurés par l'intermédiaire de chariots autonomes (7) déplaçables sur chaque niveau de rangement (1a, 1b, 1c...), équipé d'un ensemble de rails (4,6), les chariots (7) pouvant aussi être amenés d'un niveau à un autre par des moyens élévateurs (5), caractérisé en ce que :
- chaque niveau de rangement (1a, 1b, 1c...) comporte au moins un ensemble de rails (4), formant un réseau orienté selon l'axe longitudinal X du magasin, à l'intérieur de chaque allée (2a, 2b, 2c...),
- -chaque emplacement de stockage se présente comme un couloir de stockage (3), prévu pour recevoir au moins deux ou plusieurs produits à stocker, chaque couloir (3) étant lui-même équipé de rails permettant le mouvement d'un "satellite" (25) prévu pour venir déposer ou reprendre un produit,
- les chariots autonomes (7) sont équipés d'un châssis (8,9) et de roues (11,12) leur permettant de se déplacer au moins sur les rails (4) orientés selon l'axe longitudinal X du magasin, chaque chariot (7) étant apte à embarquer un "satellite" (25), vide ou chargé, et à le déposer ou le reprendre, devant chaque couloir de stockage (3), et
- les chariots automoteurs (7) sont équipés chacun d'un moyen , tel que convoyeur bi-chaîne (24), pour recevoir ou poser un produit à présenter sur un "satellite" (25), ou pour prendre ou déposer un produit sans l'intervention d'un "satellite" (25).

2. Magasin de stockage compact automatisé selon la revendication 1, caractérisé en ce qu'au moins un niveau de rangement (1a, 1b) comporte aussi des rails (6) formant au moins une voie orientée suivant l'axe transversal Y du magasin, et croisant les rails (4) orientés selon l'axe longitudinal X du magasin, chaque chariot autonome (7) comportant deux châssis permutables (8,9) équipés chacun de jeux de roues (11,12) pouvant coopérer, l'un, avec les rails (4) orientés selon l'axe longitudinal X, et l'autre, avec les rails (6) orientés selon l'axe transversal Y.

3. Magasin de stockage compact automatisé selon la revendication 1 ou 2, caractérisé en ce qu'un ascenseur (5) est implanté en face de chaque allée (2a, 2b, 2c...), en tant que moyen élévateur permettant d'amener un chariot autonome (7) d'un niveau de stockage (1a, 1b, 1c...) à un autre.
